# EUROPEAN PATENT SPECIFICATION

(11) **EP 4 008 613 B1**
(45) Date of publication and mention of the grant of the patent: **28.05.2025**
(21) Application number: 20306502.4
(22) Date of filing: 04.12.2020
(51) Int. Cl.: B62D 35/00, B62D 37/02

(54) **ACTUATING DEVICE FOR A MOBILE AERODYNAMIC BLADE OF AN AUTOMOTIVE VEHICLE REAR SPOILER**
BETÄTIGUNGSVORRICHTUNG FÜR EIN BEWEGLICHES AERODYNAMISCHES BLATT EINES KRAFTFAHRZEUGHECKSPOILERS
DISPOSITIF D'ACTIONNEMENT D'UNE PALE AÉRODYNAMIQUE MOBILE D'UN BECQUET ARRIÈRE DE VÉHICULE AUTOMOBILE

(43) Date of publication of application: 08.06.2022
(73) Proprietor: OPmobility SE, 69007 Lyon (FR); SUSPA GmbH, 90518 Altdorf (DE)
(72) Inventor: JUILLARD, Pierre, 01150 Sainte-Julie (FR); BRIAND, Benoît, 01150 Sainte-Julie (FR); GEISS, Michael, 90475 Nürnberg (DE); BIELESCH, Harald, 91220 Schnaittach (DE); HOLLERBAUM, Bernd, 95473 Creussen (DE)
(74) Representative: LLR

(56) References cited:
- WO-A1-2013/178902
- DE-A1- 10 348 284
- US-A1- 2004 174 043
- US-A1- 2020 056 682

## Description

The invention relates to a mobile aerodynamic blade for an automotive vehicle rear spoiler and especially to an actuating device intended to deploy and retract this mobile aerodynamic blade.

Some automotive vehicles include an aerodynamic blade integrated in a rear spoiler in order to influence the drag of the vehicle and/or improve brake behavior. Indeed, the aerodynamic blade is an extension of the roof of the vehicle in the rear portion of this latter and allows, when the vehicle is in motion, to push back the vortices formed by an airflow leaving the roof as far as possible from the vehicle. Those vortices are less able to exert a restraining force on the vehicle because they are further from the vehicle. Some other spoilers are mobile in rotation or in rotation and in translation in order to increase the down force of the vehicle.

It is possible to reduce the drag of the vehicle using a mobile aerodynamic blade.

Following this purpose, the mobile aerodynamic blade can be deployed and retracted in function of the vehicle speed. In other words, and when the vehicle moving at reduced speed, there is no need to deploy the aerodynamic blade which is retracted in the rear spoiler, more particularly in a cavity located between an inner panel and an outer panel of the rear spoiler. When the vehicle reaches a speed greater than a specified threshold value, the aerodynamic blade is deployed in order to reduce the drag as explained above. A further advantage of such an aerodynamic blade is that the external appearance of the vehicle is not impacted thanks to the retracted position of the mobile aerodynamic blade.

In order to allow a deployment and a retraction of the aerodynamic blade, an actuating device is located inside the cavity of the rear spoiler. This actuating device is constituted by a drive unit formed by a motor connected to a center gear wheel connected to a translation element. This actuator is located below the aerodynamic blade and is able to cooperate with a rack placed at the interface between the center gear wheel and the aerodynamic blade and rigidly attached to the aerodynamic blade.

When it is necessary to deploy the aerodynamic blade, the drive unit is activated and the gear wheel is set in motion (in rotation around a horizontal axis) in order to deploy the aerodynamic blade. When it is needed to retract the aerodynamic blade, the motor is activated in order to set in motion the gear wheel in opposite running rotation and to retract the aerodynamic blade.

In such a configuration, the main issue is that the actuating device and the blade extend on a large space in a vertical direction when this assembly is mounted into the cavity of the rear spoiler. This can prevent to place the actuating device in a part of the cavity which could be favorable. It can even be necessary to design a specific area to integrate the actuating device. Consequently, the actuating device and its positioning inside the rear spoiler do not allow designing the rear spoiler with a large flexibility because it is necessary to anticipate the fitting of the actuating device. This may lead to an unsatisfactory result in aesthetic terms.

Furthermore, an enlargement of the cavity would lead to a lowering of the rear spoiler inner panel and would affect the available space over rear passengers' head. It is not possible to use actuators too small because of the power needed to deploy and retract the aerodynamic blade.

Documents US 2004/0174043 A1 and DE 103 48 284 A1 disclose actuating devices according to the preamble of claim 1.

The aim of the invention is to provide an actuating system of a mobile aerodynamic blade for an automotive vehicle rear spoiler allowing overcoming the issues listed above.

The invention consists in an actuating device according to claim 1.

Thanks to this configuration which consists in a burst of the actuating device in a transversal direction of an automotive vehicle on which the actuating device is mounted, the thickness of the actuating device being smaller than in the prior art in a vertical direction. Indeed, the sliding unit, which can for example include a rack, cooperates with the outer gear wheel and is located far from the actuator, running thanks to the transmission of movement element. It is not necessary, as in the prior art, to place every elements at the same location. Furthermore, this arrangement allows to push or pull the blade on both sides of the sliding units, which ensures a proper driving without the stick-slip effect or tilting which occurs on a single or center side actuation.

Known designs (e.g. sun roof) have a push pull cable this design ensures also an actuation on both sides of a moving device but needs a lot additional space for the routing of the cable in vertical direction.

The described design connects the strength of a both side actuated push pull cable and a center drive unit like on a single actuated system and needs only little space in a longitudinal direction with an higher efficiency. An further development is that the sliding units can be combined with an rack. This ensures short force flow and small elasticities and compact design.

Consequently, it is possible to place the actuating device in a narrower space and to be freer in the rear spoiler design. It is also possible to use a larger motor with enough power to deploy and retract the aerodynamic blade.

Furthermore, with this configuration, it is possible to deploy and retract the mobile aerodynamic blade faster due to a greater speed-reduction gear ratio with a powerful motor thanks to several of gears which allow more freedom to design the actuating device.

According to the invention, the outer gear wheel is a double gear wheel comprising a first level cooperating with the transmission of movement element and a second level cooperating with the sliding unit.

The actuating device according to the invention can also comprise at least one of the following features:
- the actuating device comprises two outer gear wheels cooperating with two sliding units, connected to the transmission of movement element and arranged on both sides of the main gear wheel ;
- the main gear wheel and the outer gear wheel are rotatable around different vertical axes of rotation when the actuating device is mounted in the automotive vehicle rear spoiler;
- the outer gear wheel is rotatable around a vertical axis of rotation and the main gear wheel is rotatable about a horizontal axis of rotation when the actuating device is mounted in the automotive vehicle rear spoiler;
- the main gear wheel and the outer gear wheel are aligned, preferably in a longitudinal direction of the rear spoiler;
- the transmission of movement element is formed by :
   - a rack,
   - an endless screw,
   - a helix flexible shaft placed into a sheath open in the contact areas between the endless screw and the main gear wheel and double gear wheel, or
   - a rod integral with the main gear wheel (8) and comprising areas formed by a screw thread in contact with the outer gear wheel;
- the sliding unit comprises a rack cooperating with the outer gear wheel and a slide arranged for guiding the mobile aerodynamic blade;
- the motor is connected to an electronic control unit arranged to command the deployment and the retraction of the mobile aerodynamic blade in function of the automotive vehicle speed; and
- the drive unit and a rotation axis of the outer gear wheel are attached to a main body of the actuating device, the main body being attached to an attachment element arranged to attach the actuating device to an automotive vehicle rear spoiler.

The invention also concerns a mobile aerodynamic blade for an automotive vehicle rear spoiler comprising an actuating device according to the invention.

The mobile aerodynamic blade according to the invention can also comprise at least one of the following features:
- the rack cooperating with the outer gear wheel is integrally formed with a main body of the mobile aerodynamic blade; and
- the rack cooperating with the outer gear wheel and the slide arranged for guiding the mobile aerodynamic blade form only one piece, a main body of the mobile aerodynamic blade being attached to this piece.

The invention also concerns an automotive vehicle rear spoiler comprising a mobile aerodynamic blade according to the invention placed in a cavity formed into a main body of the rear spoiler.

The automotive vehicle rear spoiler according to the invention can also comprise the following feature: the mobile aerodynamic blade is attached to the main body of the rear spoiler by an attachment element extending in a longitudinal direction of the automotive vehicle and attached to a main body of the actuating device on which the actuator (4) and a rotation axis of the double gear wheel are attached.

### Brief description of the drawings

The invention will be described in details, given only as an example and using the attached drawings in which:
figure 1 is a perspective view of the actuating device according to a first embodiment of the invention without sliding unit,
figure 2 is another view of the actuating device of figure 1, seen from above,
figure 3 is a perspective view of the actuating device according to a second embodiment of the invention without sliding unit,
figure 4 is another view of the actuating device of figure 1, seen from above,
figure 5 is a view of a part of the actuating device according to the first embodiment of the invention with a sliding unit and without the main blade body,
figure 6 is a view of a part of the actuating device according to the second embodiment of the invention with a sliding unit and without the main blade body,
figure 7 is a front view of the actuating device according to the first embodiment of the invention comprising a main body and an attachment element to attach the actuating device to the rear spoiler,
figure 8 is a front view of the actuating device according to the second embodiment of the invention comprising a main body and an attachment element to attach the actuating device to the rear spoiler,
figure 9 is side view of the actuating device of figure 7,
figure 10 is side view of the actuating device of figure 8,

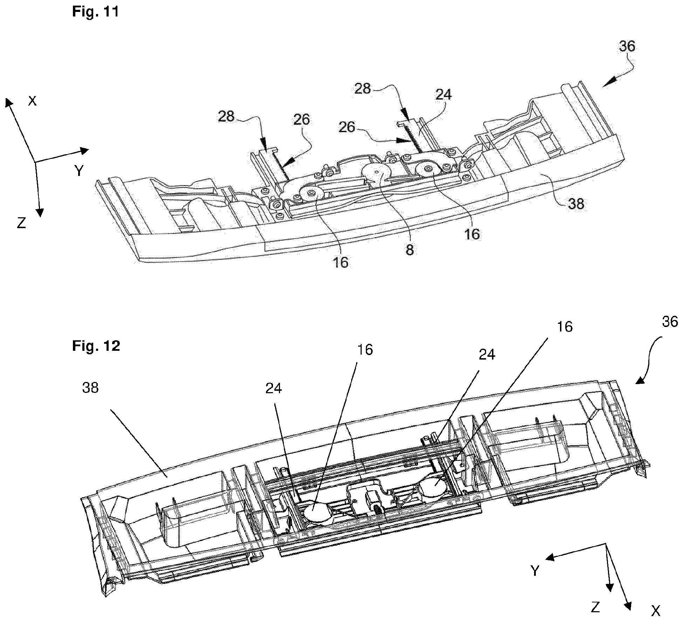

figure 11 is a perspective view of a mobile aerodynamic blade according to the invention comprising a main body and the actuating device according to the first embodiment of the invention,
figure 12 is a perspective view of a mobile aerodynamic blade according to the invention comprising a main body and the actuating device according to the second embodiment of the invention, and

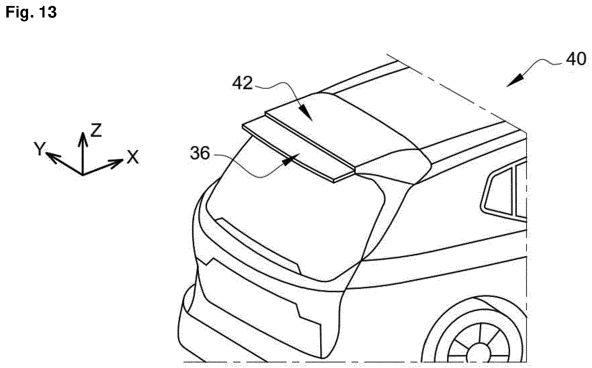

figure 13 is a perspective view of a rear part of an automotive vehicle including a rear spoiler according to the invention.

### Detailed description

In the detailed description, the longitudinal direction (or axis) X, the transversal direction (or axis) Y and the vertical direction (or axis) Z make reference to the conventional directions of an automotive vehicle and are illustrated on the figures.

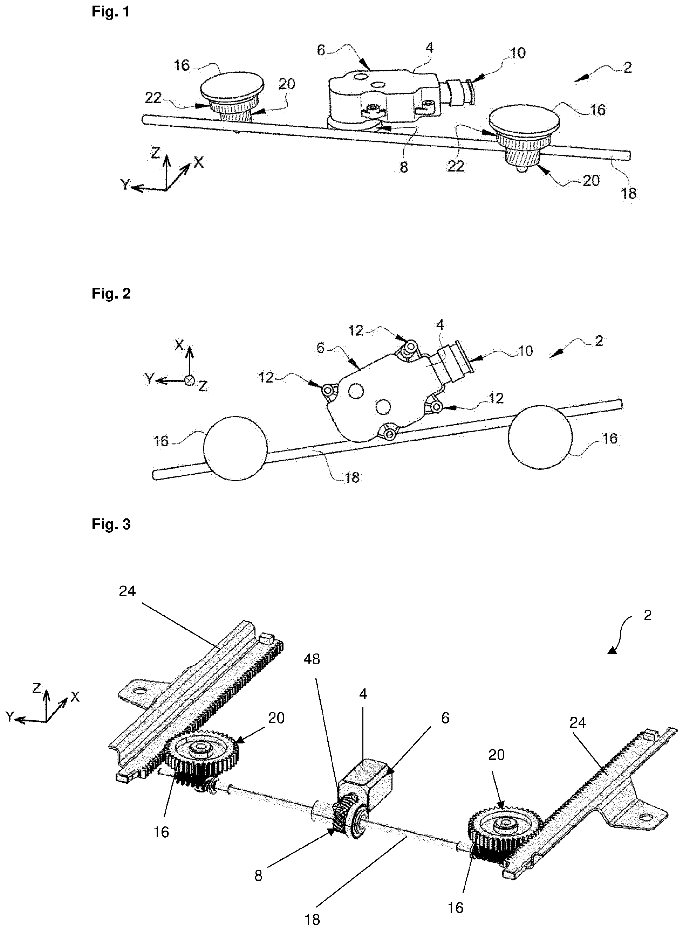

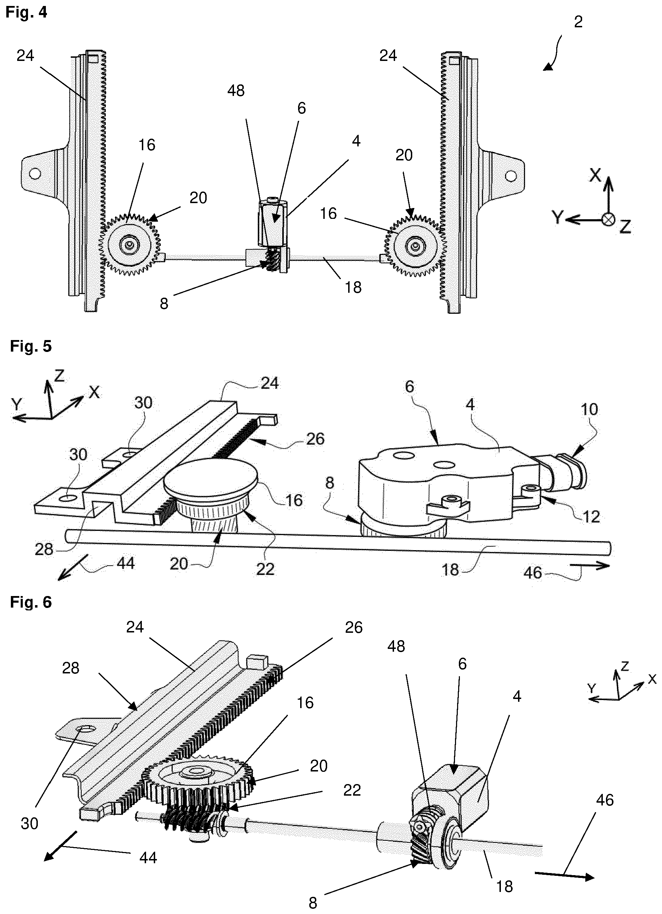

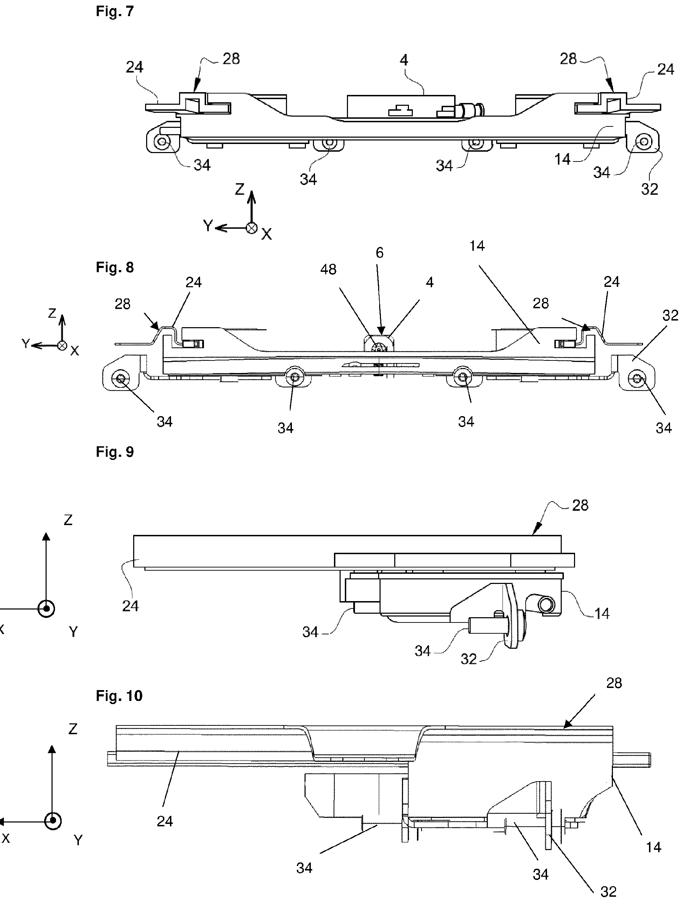

Figures 1 and 2 show an actuating device 2 of a mobile aerodynamic blade (reference 36 on figure 6) for an automotive vehicle 40 rear spoiler 42. A explained above, this actuating device 2 cooperates with the mobile aerodynamic blade 36 and is placed in a cavity of an automotive vehicle 40 rear spoiler 42, more specifically between an inner panel and an outer panel constituting the rear spoiler 42. This rear spoiler 42 has an opening in its rear side following a longitudinal axis (direction X) of the automotive vehicle 40 on which the rear spoiler 42 is mounted, this opening allows the mobile aerodynamic blade to go back and forth depending on the speed of the automotive vehicle 40. The mobile aerodynamic blade 36 and the rear spoiler 42, shown on figure 7, are known for a skilled person and will not be described in details in this application.

The actuating device comprises a drive unit 4 comprising a motor 6 and a main gear wheel 8.

According to the first embodiment of the invention, the motor 6 comprises an outlet axis on which the main gear wheel 8 is mounted in order to be set in motion by the motor 6. The motor 6 is able to set the main gear wheel 8 in motion in two opposite directions.

According to a second embodiment of the invention, the outlet axis of the motor 6 is linked to an endless screw 48 in contact with the main gear wheel 8 (in this case the main gear wheel 8 can be rotatable around an horizontal axis). The motor 6 is able to set the endless screw in motion, and consequently the main gear wheel 8, in two opposite directions.

The actuating device 2 comprises a connector 10 to be linked to a power supply. The motor 6 is connected to an electronic control unit configured to activate this latter in order to deploy and retract the mobile aerodynamic blade in function of the automotive vehicle 40 speed as explained above. The motor 6 also comprises attaching means 12, for example screws, to attach this latter to a main body 14 of the actuating device shown on figures 4 and 5.

The actuating device 2 also comprises at least one outer gear wheel 16, advantageously two as illustrated on the figures. The outer gear wheel is a double gear wheel. In the following description, we are going to described this possibility using the terms *"double gear wheel 16'*"*.*

The double gears wheels 16 are connected to the main gear wheel 8 by a transmission of movement element 18. More precisely, the transmission of movement element 18 is connected to the main gear wheel and to a first level 20 of the double gear wheels 16. In this configuration, the double gear wheels 16 are set in motion by the motor 6 and can be placed far from this latter. As described below, each other second level 22 of the double gear wheels 16 is in contact with a sliding unit 24 allowing to deploy and retract the mobile aerodynamic blade 36. The second level 22 cooperating with the sliding unit has a larger diameter than first level 20 cooperating with the transmission of movement element 18.

Advantageously, the two double gear wheels 16 are arranged on both sides of the main gear wheel. Preferably, the main gear wheel 8 is centered relative to the double gear wheels 16. When the actuating device is located inside the rear spoiler 42, the two assemblies double gear wheel 16 / sliding unit 24 are placed at the two extremities of the spoiler following a transverse direction (direction Y) of the automotive vehicle 40 on which the rear spoiler 42 is mounted. This allows a better guiding of the mobile aerodynamic blade.

All gear wheels of the actuating device 2 illustrated on the figures can be rotatable around different vertical axes of rotation when the actuating device is mounted in the automotive vehicle 40 rear spoiler 42, as illustrated on figures 1, 2, 5, 7 and 9. Thus, the main gear wheel 8 and the double gear wheels 16 extend in a horizontal direction, which allows reducing the size of the actuating device 2 in a vertical direction (direction Z) of an automotive vehicle 40 comprising a rear spoiler 42 in which the actuating device 2 is placed. The motor 6 is turned according a 90° angle regarding to the actuator of the prior art in order to place the main gear wheel 8 in such a horizontal direction. Regarding the double gear wheels 16, their positioning is free and their rotation axes could be attached to the main body 14 of the actuating device 2. Alternatively, and as illustrated on figures 3, 4, 6, 8 and 10, the main gear wheel 8 can be rotatable around a horizontal axis and the double gear wheels 16 can be rotatable around two different vertical axes. This configuration allows to use a different transmission of movement element 18 as described below.

The main gear wheel 8 and the double gear wheels 16 can be aligned, preferably in a longitudinal direction of the rear spoiler 42 in order to obtain a smaller actuating device 2 in a vertical direction.

The transmission of movement element 18 can be formed by a rack (for greater sustainability and yield), by an endless screw (flexible and consequently easy to integrate), by a helix flexible shaft placed into a sheath open in the contact areas between the endless screw and the main and double gear wheels. More broadly, the transmission of movement element 18 is able to perform a linear transmission of tensile and compressive force. This latter may be a push pull cable or a helix cable.

If it is formed by a rack, this latter has teeth in contact with teeth of the main gear wheel 8 and of the first level 20 of the double gear wheels 16. When the main gear wheel 8 is set in rotation by the motor 6, the rack is translated in one direction (translational direction 46) and set in rotation, thanks to this movement, the double gear wheels 16. The double gear wheels 16, which cooperate with sliding units 24 thanks to their second level 22, allow deploying the mobile aerodynamic blade 36 (thanks to the translational direction 44 of the sliding units 24). When it is needed to retract the mobile aerodynamic blade 36 (for example because the automotive vehicle 40 speed is lower than a predetermined threshold value), the motor 6 sets in rotation the main gear wheel 8 in an opposite direction than for the deployment of the mobile aerodynamic blade 36. The rack is translated in an opposite direction than for the deployment of the mobile aerodynamic blade 36 and sets in rotation, thanks to this movement, the double gear wheels 16 in an opposite direction than for the deployment of the mobile aerodynamic blade 36. These latter allow, thanks to the sliding units 24, to retract the mobile aerodynamic blade 36.

If the transmission of movement element 18 is formed by an endless screw, this latter is in contact with teeth of the main gear wheel 8 and of the first level 20 of the double gear wheels 16. When the main gear wheel 8 is set in rotation by the motor 6, the endless screw is also set in rotation and translated (translational direction 46) in one direction and sets in rotation, thanks to this movement, the double gear wheels 16. The double gear wheels 16, which cooperate with sliding units 24, allow deploying the mobile aerodynamic blade 36 (thanks to the translational direction 44 of the sliding units 24). When it is needed to retract the mobile aerodynamic blade 36, the motor 6 sets in rotation the main gear wheel 8 in an opposite direction than for the deployment of the mobile aerodynamic blade 36. The endless screw is set in rotation and translated in an opposite direction than for the deployment of the mobile aerodynamic blade 36 and sets in rotation, thanks to this movement, the double gear wheels 16 in an opposite direction than for the deployment of the mobile aerodynamic blade 36. These latter allow, thanks to the sliding units 24, to retract the mobile aerodynamic blade 36.

If the transmission of movement element 18 is formed by a helix flexible shaft placed into a sheath open in the contact areas between the helix flexible shaft and the main and double gear wheels, this latter is in contact with teeth of the main gear wheel 8 and of the first level 20 of the double gear wheels 16. When the main gear wheel 8 is set in rotation by the motor 6, the helix flexible shaft is translated (translational direction 46) in one direction and sets in rotation, thanks to this movement, the double gear wheels 16. The double gear wheels 16, which cooperate with sliding units 24, allow deploying the mobile aerodynamic blade 36 (thanks to the translational direction 44 of the sliding units 24). When it is needed to retract the mobile aerodynamic blade 36, the motor 6 sets in rotation the main gear wheel 8 in an opposite direction than for the deployment of the mobile aerodynamic blade 36. The helix flexible shaft is translated in an opposite direction than for the deployment of the mobile aerodynamic blade 36 and sets in rotation, thanks to this movement, the double gear wheels 16 in an opposite direction than for the deployment of the mobile aerodynamic blade 36. These latter allow, thanks to the sliding units 24, to retract the mobile aerodynamic blade 36.

Figures 3, 4 and 6 illustrate another embodiment in which the transmission of movement element 18 is a rod integral with the main gear wheel (8) and comprising areas formed by a screw thread in contact with the outer gear wheel 16, with the first level 20 of the double gear wheel 16 on figures. In such a configuration, the endless screw 48 linked to the outlet axis of the motor 6 sets in rotation the main gear wheel 8. The rod is also set in rotation. Consequently, the areas formed by a screw thread set in rotation the double gear wheels 16 which, cooperating with sliding units 24, allow deploying the mobile aerodynamic blade 36 (thanks to the translational direction 44 of the sliding units 24). When it is needed to retract the mobile aerodynamic blade 36, the endless screw 48 sets in rotation the main gear wheel 8 in an opposite direction than for the deployment of the mobile aerodynamic blade 36. The rod is also put in rotation in an opposite direction than for the deployment of the mobile aerodynamic blade 36 and sets in rotation, thanks to this movement, the double gear wheels 16 in an opposite direction than for the deployment of the mobile aerodynamic blade 36. These latter allow, thanks to the sliding units 24, to retract the mobile aerodynamic blade 36.

Other means than a rack, an endless screw, a helix flexible shaft or a rod as described above could be used to form the transmission of movement element 18, for example a belt.

The sliding units 24 can be formed by a rack 26 cooperating with the second level 22 of the double gear wheels 16 and a slide 28 arranged for guiding the mobile aerodynamic blade 36. Only one sliding unit 24 is illustrated on figures 5 and 6 cooperating with one double gear wheel 16. The configuration is the same for the other double gear wheel 16 (figures 3 and 4, two double gear wheels 16 with two sliding units 24). The rack is oriented in order to cooperate with the second level 22 of a double gear wheel 16.

As illustrated on the figures, the rack 26 and the slide 28 can be parts of a unique piece which ensure both guiding and motion transfer functions. The mobile aerodynamic blade main body 38 is rigidly attached to the slides 28, for example using the through holes 30 shown on figures 7 to 10 and cooperating with other through holes made into the mobile aerodynamic blade main body 38 and attaching means such as screws or rivets. Other ways to attach the mobile aerodynamic blade main body 38 to the sliding units 24 are possible and known by a skilled person. Obviously, these latter are not directly attached to the main body 14 of the actuating device 2 in order to move when the motor 6 is activated. The configuration with two sliding units 24 as shown on figures is interesting because it allows to shorten the slide 28 and the rack 24 regarding the actuating devices of the prior art because the gear ratio between the main gear wheel 8 and the double gear wheels 16 is different. Thus, the actuating device 2 has no impact on the rear spoiler 42 sealing.

Alternatively, it could be possible to form the rack 26 directly on the mobile aerodynamic blade main body 38, for example during the molding process of this latter. In this case, the slide 28 is a piece separated from the rack.

In a third embodiment, the rack 26 and the slide 28 are two pieces different from the mobile aerodynamic blade main body 38.

As explained above, the double gear wheels 16 are set in rotation when a deployment or a retraction of the mobile aerodynamic blade 36 is needed. The second level 22 of the gear wheels 16 allows to translate the sliding units 24 thanks to the rack 26 in two opposite directions in order to deploy or retract the mobile aerodynamic blade 36.

When there are several sliding units 24, these latter are preferably parallel to ensure an optimal a deployment and retraction of the mobile aerodynamic blade 36.

Thanks to the form (the section) of the slides 28, these latter can guide the mobile aerodynamic blade 36 in a vertical direction (direction Z) and in a transverse direction (Y) of the automotive vehicle 40 on which the mobile aerodynamic blade 36 is mounted.

As explained above, the actuating device also comprises a main body 14 (visible on figures 4 and 5) on which the motor 6 and the rotation axes of the double gear wheels can be attached. The other parts of the actuating device 2 (transmission of movement element 18, sliding units 24, etc.) are not attached to the main body 14.

In the example illustrated on the figures, the main body 14 of the actuating device 2 is attached (glued, screwed, etc.) to an attachment element 32 which allow to connect the main body 14 of the actuating device to a wall of the rear spoiler 42 cavity (after having attach the mobile aerodynamic blade 36 on the actuating device).

This attachment element has a form designed to cooperate with the actuating device 2 and the rear spoiler 42 wall, with a first part attached to the actuating device 2 and a second part forming a right angle with the first part in the example of figures 4 and 5. Screws 34 can be used to attach the attachment element to the rear spoiler 42 wall. It is interesting to use reversible attaching means to be able to remove the assembly formed by the actuating device 2 and the mobile from the rear spoiler 42 cavity in sliding this assembly after attaching means removal and without any need to remove a part of the rear spoiler 42, for example the inner panel. This is interesting to simplify the maintenance of the system, for example in case of mechanical issues with the mobile aerodynamic blade.

### List of reference signs

2 : actuating device
4 : drive unit
6 : motor
8 : main gear wheel
10 : connector
12 : attaching means
14 : actuating device main body
16 : outer gear wheel/double gear wheels
18 : transmission of movement element
20 : double gear wheels first level
22 : double gear wheels second level
24 : sliding units
26 : rack
28 : slide
30 : through holes
32 : attaching element
34 : screws
36 : mobile aerodynamic blade
38 : mobile aerodynamic blade main body
40 : automotive vehicle
42 : rear spoiler
44 : translational direction of the sliding units
46 : translational direction of the transmission of movement element
48 : endless screw

## Claims

1. Actuating device (2) for a mobile aerodynamic blade for an automotive vehicle (40) rear spoiler (42), comprising a drive unit (4) comprising a motor (6) and a main gear wheel (8), the actuating device (2) comprising :
- at least one outer gear wheel (16), and
- a transmission of movement element (18),
the transmission of movement element (18) being connected to the main gear wheel (8) and to the outer gear wheel (16), the outer gear wheel (16) cooperating with a sliding unit (24) allowing to deploy and retract the mobile aerodynamic blade, **characterized in that** the outer gear wheel (16) is a double gear wheel comprising a first level (20) cooperating with the transmission of movement element (18) and a second level (22) cooperating with the sliding unit (24).

2. Actuating device (2) according to claim 1 comprising two outer gear wheels (16) cooperating with two sliding units (24), connected to the transmission of movement (18) element and arranged on both sides of the main gear wheel (8).

3. Actuating device (2) according to any of the previous claims, wherein the main gear wheel (8) and outer gear wheel (16) are rotatable around different vertical axes of rotation when the actuating device (2) is mounted in the automotive vehicle (40) rear spoiler (42).

4. Actuating device (2) according to claims 1 or 2, wherein the outer gear wheel (16) is rotatable around a vertical axis of rotation and the main gear wheel (8) is rotatable about a horizontal axis of rotation when the actuating device (2) is mounted in the automotive vehicle (40) rear spoiler (42).

5. Actuating device (2) according to any of the previous claims, wherein the main gear wheel (8) and the outer gear wheel (16) are aligned, preferably in a longitudinal direction (X) of the rear spoiler (42).

6. Actuating device (2) according to any of the previous claims, wherein the transmission of movement element (18) is formed by :
- a rack,
- an endless screw,
- a helix flexible shaft placed into a sheath open in the contact areas between the endless screw and the main gear wheel (8) and double gear wheel (16), or
- a rod integral with the main gear wheel (8) and comprising areas formed by a screw thread in contact with the outer gear wheel (16).

7. Actuating device (2) according to any of the previous claims, wherein the sliding unit (24) comprises a rack (26) cooperating with the outer gear wheel (16) and a slide (28) arranged for guiding the mobile aerodynamic blade (36).

8. Actuating device (2) according to any of the previous claims, wherein the motor (6) is connected to an electronic control unit arranged to command the deployment and the retraction of the mobile aerodynamic blade (36) in function of the automotive vehicle (40) speed.

9. Actuating device (2) according to any of the previous claims, wherein the drive unit (4) and a rotation axis of the outer gear wheel (16) are attached to a main body (14) of the actuating device (2), the main body (14) being attached to an attachment element (32) arranged to attach the actuating device (2) to an automotive vehicle (40) rear spoiler (42).

10. Mobile aerodynamic blade (36) for an automotive vehicle (40) rear spoiler (42) comprising an actuating device (2) according to one of the previous claims.

11. Mobile aerodynamic blade (36) according to claim 10, wherein the rack (26) cooperating with the outer gear wheel (16) is integrally formed with a main body (38) of the mobile aerodynamic blade (36).

12. Mobile aerodynamic blade (36) according to claim 10, wherein the rack (26) cooperating with the outer gear wheel (16) and the slide (28) arranged for guiding the mobile aerodynamic blade (36) form only one piece, a main body (38) of the mobile aerodynamic blade (36) being attached to this piece.

13. Automotive vehicle rear (42) spoiler comprising a mobile aerodynamic blade (36) according to any of claims 10 to 12 placed in a cavity formed into a main body of the rear spoiler (42).

14. Automotive vehicle rear spoiler (42) according to claim 13, wherein the mobile aerodynamic blade (36) is attached to the main body of the rear spoiler (42) by an attachment element (32) extending in a longitudinal direction of the automotive vehicle (40) and attached to a main body (14) of the actuating device (14) on which the actuator (4) and a rotation axis of the double gear wheel (16) are attached.

## Patentansprüche

1. Betätigungsvorrichtung (2) für ein bewegliches aerodynamisches Blatt für einen Heckspoiler (42) eines Kraftfahrzeugs (40), aufweisend eine Antriebseinheit (4), die einen Motor (6) und ein Hauptzahnrad (8) aufweist, wobei die Betätigungsvorrichtung (2) aufweist:
- mindestens ein Außenzahnrad (16), und
- ein Bewegungsübertragungselement (18),
wobei das Bewegungsübertragungselement (18) mit dem Hauptzahnrad (8) und dem Außenzahnrad (16) verbunden ist, wobei das Außenzahnrad (16) mit einer Gleiteinheit (24) zusammenwirkt, die das Ausfahren und Einfahren des beweglichen aerodynamischen Blatts ermöglicht, **dadurch gekennzeichnet, dass** das Außenzahnrad (16) ein Doppelzahnrad ist, das eine erste Ebene (20), die mit dem Bewegungsübertragungselement (18) zusammenwirkt, und eine zweite Ebene (22), die mit der Gleiteinheit (24) zusammenwirkt, aufweist.

2. Betätigungsvorrichtung (2) nach Anspruch 1, aufweisend zwei Außenzahnräder (16), die mit zwei Gleiteinheiten (24) zusammenwirken, mit dem Bewegungsübertragungselement (18) verbunden sind und auf beiden Seiten des Hauptzahnrads (8) angeordnet sind.

3. Betätigungsvorrichtung (2) nach einem der vorhergehenden Ansprüche, wobei das Hauptzahnrad (8) und das Außenzahnrad (16) um unterschiedliche vertikale Drehachsen drehbar sind, wenn die Betätigungsvorrichtung (2) in dem Heckspoiler (42) des Kraftfahrzeugs (40) montiert ist.

4. Betätigungsvorrichtung (2) nach Anspruch 1 oder 2, wobei das Außenzahnrad (16) um eine vertikale Drehachse und das Hauptzahnrad (8) um eine horizontale Drehachse drehbar ist, wenn die Betätigungsvorrichtung (2) in dem Heckspoiler (42) des Kraftfahrzeugs (40) montiert ist.

5. Betätigungsvorrichtung (2) nach einem der vorhergehenden Ansprüche, wobei das Hauptzahnrad (8) und das Außenzahnrad (16), vorzugsweise in einer Längsrichtung (X) des Heckspoilers (42), fluchten.

6. Betätigungsvorrichtung (2) nach einem der vorhergehenden Ansprüche, wobei das Bewegungsübertragungselement (18) gebildet ist durch:
- eine Zahnstange,
- eine Endlosschraube,
- eine schraubenförmige biegsame Welle, die in einer in den Kontaktbereichen zwischen der Endlosschraube und dem Hauptzahnrad (8) und dem Doppelzahnrad (16) offenen Hülse angeordnet ist, oder
- einer mit dem Hauptzahnrad (8) fest verbundenen Stange, die Bereiche aufweist, die durch ein Schraubengewinde gebildet werden, das in Kontakt mit dem äußeren Zahnrad (16) steht.

7. Betätigungsvorrichtung (2) nach einem der vorhergehenden Ansprüche,
**dadurch gekennzeichnet, dass** die Gleiteinheit (24) eine mit dem Außenzahnrad (16) zusammenwirkende Zahnstange (26) und einen Schlitten (28) aufweist, der zur Führung des beweglichen aerodynamischen Blatts (36) dient.

8. Betätigungsvorrichtung (2) nach einem der vorhergehenden Ansprüche, wobei der Motor (6) mit einer elektronischen Steuereinheit verbunden ist, die so beschaffen ist, dass sie das Ausfahren und das Einfahren des beweglichen aerodynamischen Blatts (36) in Abhängigkeit von der Geschwindigkeit des Kraftfahrzeugs (40) steuert.

9. Betätigungsvorrichtung (2) nach einem der vorhergehenden Ansprüche, wobei die Antriebseinheit (4) und eine Drehachse des Außenzahnrades (16) an einem Hauptkörper (14) der Betätigungsvorrichtung (2) befestigt sind, wobei der Hauptkörper (14) an einem Befestigungselement (32) befestigt ist, das zur Befestigung der Betätigungsvorrichtung (2) an einem Heckspoiler (42) eines Kraftfahrzeugs (40) angeordnet ist.

10. Bewegliches aerodynamisches Blatt (36) für einen Heckspoiler (42) eines Kraftfahrzeugs (40) mit einer Betätigungsvorrichtung (2) nach einem der vorhergehenden Ansprüche.

11. Bewegliches aerodynamisches Blatt (36) nach Anspruch 10, wobei die mit dem äußeren Zahnrad (16) zusammenwirkende Zahnstange (26) einstückig mit einem Hauptkörper (38) des beweglichen aerodynamischen Blatts (36) ausgebildet ist.

12. Bewegliches aerodynamisches Blatt (36) nach Anspruch 10, **dadurch gekennzeichnet, dass** die mit dem äußeren Zahnrad (16) zusammenwirkende Zahnstange (26) und der zur Führung des beweglichen aerodynamischen Blatts (36) angeordnete Schlitten (28) ein einziges Teil bilden, an dem ein Hauptkörper (38) des beweglichen aerodynamischen Blatts (36) befestigt ist.

13. Kraftfahrzeug-Heckspoiler (42) aufweisend ein bewegliches aerodynamisches Blatt (36) nach einem der Ansprüche 10 bis 12, das in einem in einem Hauptkörper des Heckspoilers (42) ausgebildeten Hohlraum angeordnet ist.

14. Kraftfahrzeug-Heckspoiler (42) nach Anspruch 13, wobei das bewegliche aerodynamische Blatt (36) mit einem sich in Längsrichtung des Kraftfahrzeugs (40) erstreckenden Befestigungselement (32) an dem Hauptkörper des Heckspoilers (42) befestigt ist und an einem Hauptkörper (14) der Betätigungsvorrichtung (2) angebracht ist, an dem der Antrieb (4) und eine Drehachse des Doppelzahnrads (16) befestigt sind.

## Revendications

1. Dispositif d'actionnement (2) d'une lame aérodynamique mobile pour un becquet arrière (42) de véhicule automobile (40), comprenant une unité d'entraînement (4) comprenant un moteur (6) et une roue dentée principale (8), le dispositif d'actionnement (2) comprenant :
- au moins une roue dentée extérieure (16), et
- un élément de transmission de mouvement (18),
l'élément de transmission de mouvement (18) étant reliée à la roue dentée principale (8) et à la roue dentée extérieure (16), la roue dentée extérieure (16) coopérant avec une unité coulissante (24) permettant de déployer et de rétracter la lame aérodynamique mobile, **caractérisé en ce que** la roue dentée extérieure (16) est une roue dentée double comprenant un premier niveau (20) coopérant avec l'élément de transmission de mouvement (18) et un second niveau (22) coopérant avec l'unité coulissante (24).

2. Dispositif d'actionnement (2) selon la revendication 1, comprenant deux roues dentées extérieures (16) coopérant avec deux unités coulissantes (24), reliées à l'élément de transmission du mouvement (18) et disposées de part et d'autre de la roue dentée principale (8).

3. Dispositif d'actionnement (2) selon l'une quelconque des revendications précédentes, dans lequel la roue dentée principale (8) et la roue dentée extérieure (16) sont orientables autour de différents axes verticaux de rotation lorsque le dispositif d'actionnement (2) est monté dans le becquet arrière (42) du véhicule automobile (40).

4. Dispositif d'actionnement (2) selon les revendications 1 ou 2, dans lequel la roue dentée extérieure (16) est rotative autour d'un axe de rotation vertical et la roue dentée principale (8) est rotative autour d'un axe de rotation horizontal lorsque le dispositif d'actionnement (2) est monté dans le becquet arrière (42) du véhicule automobile (40).

5. Dispositif d'actionnement (2) selon l'une quelconque des revendications précédentes, dans lequel la roue dentée principale (8) et la roue dentée extérieure (16) sont alignées, de préférence dans une direction longitudinale (X) du becquet arrière (42).

6. Dispositif d'actionnement (2) selon l'une quelconque des revendications précédentes, dans lequel la transmission de l'élément de mouvement (18) est formée par :
- une crémaillère,
- une vis sans fin,
- un arbre flexible hélicoïdal placé dans une gaine ouverte dans les zones de contact entre la vis sans fin et la roue dentée principale (8) et la roue dentée double (16), ou
- une tige solidaire de la roue dentée principale (8) et comportant des zones formées par un filetage de vis en contact avec la roue dentée extérieure (16).

7. Dispositif d'actionnement (2) selon l'une quelconque des revendications précédentes, dans lequel l'unité coulissante (24) comprend une crémaillère (26) coopérant avec la roue dentée extérieure (16) et une glissière (28) agencée pour guider la lame aérodynamique mobile (36).

8. Dispositif d'actionnement (2) selon l'une quelconque des revendications précédentes, dans lequel le moteur (6) est relié à une unité de commande électronique agencée pour commander le déploiement et la rétraction de la lame aérodynamique mobile (36) en fonction de la vitesse du véhicule automobile (40).

9. Dispositif d'actionnement (2) selon l'une quelconque des revendications précédentes, dans lequel l'unité d'entraînement (4) et un axe de rotation de la roue dentée extérieure (16) sont fixés à un corps principal (14) du dispositif d'actionnement (2), le corps principal (14) étant fixé à un élément de fixation (32) agencé pour fixer le dispositif d'actionnement (2) à un becquet arrière (42) de véhicule automobile (40).

10. Lame aérodynamique mobile (36) pour véhicule automobile (40) becquet arrière (42) comprenant un dispositif d'actionnement (2) selon l'une des revendications précédentes.

11. Lame aérodynamique mobile (36) selon la revendication 10, dans laquelle la crémaillère (26) coopérant avec la roue dentée extérieure (16) est formée intégralement avec un corps principal (38) de la lame aérodynamique mobile (36).

12. Lame aérodynamique mobile (36) selon la revendication 10, dans laquelle la crémaillère (26) coopérant avec la roue dentée extérieure (16) et la glissière (28) disposée pour guider la lame aérodynamique mobile (36) ne forment qu'une seule pièce, un corps principal (38) de la lame aérodynamique mobile (36) étant fixé à cette pièce.

13. Becquet arrière de véhicule automobile (42) comprenant une lame aérodynamique mobile (36) selon l'une quelconque des revendications 10 à 12, placé dans une cavité formée dans un corps principal du becquet arrière (42).

14. Becquet arrière de véhicule automobile (42) selon la revendication 13, dans lequel la lame aérodynamique mobile (36) est fixée au corps principal du becquet arrière (42) par un élément de fixation (32) s'étendant dans une direction longitudinale du véhicule automobile (40) et fixé à un corps principal (14) du dispositif d'actionnement (14) sur lequel l'actionneur (4) et un axe de rotation de la roue dentée double (16) sont fixés.
